(19) **Europäisches Patentamt**

**European Patent Office**

**Office européen des brevets**

(11) Numéro de publication: **0 038 746**
**B1**

(12) **FASCICULE DE BREVET EUROPEEN**

(45) Date de publication du fascicule du brevet:
04.06.86

(51) Int. Cl.⁴: **E 04 B 1/86,** G 10 K 11/16,
B 32 B 3/12

(21) Numéro de dépôt: 81400588.0

(22) Date de dépôt: 13.04.81

(54) Couche poreuse pour structure composite destinée à l'absorption d'énergie sonore et son procédé de fabrication.

(30) Priorité: 18.04.80 FR 8008728

(43) Date de publication de la demande:
28.10.81 Bulletin 81/43

(45) Mention de la délivrance du brevet:
04.06.86 Bulletin 86/23

(84) Etats contractants désignés:
**BE CH DE GB IT LI NL SE**

(56) Documents cités:
**FR - A - 2 033 264**
**FR - A - 2 232 440**
**FR - A - 2 237 560**
**GB - A - 1 311 202**
**US - A - 3 502 171**
**US - A - 4 091 160**

(73) Titulaire: **Société Nationale Industrielle Aérospatiale**
**Société anonyme dite:, 37 Bld de Montmorency,**
**F-75016 Paris (FR)**

(72) Inventeur: **Briens, Guy, 38 rue Segoffin,**
**F-92400 Courbevoie (FR)**

(74) Mandataire: **Bonnetat, Christian, Cabinet PROPI**
**Conseils 23 rue de Léningrad, F-75008 Paris (FR)**

ACTORUM AG

## Description

La présente invention concerne une structure composite pour l'absorption d'énergie sonore, ainsi qu'un procédé pour la fabrication d'une couche poreuse pour une telle structure. Elle s'applique tout particulièrement à l'absorption d'énergie sonore dans les nacelles des turbomoteurs des aéronefs.

On sait que les turbomoteurs, principalement ceux du type à double-flux, sont particulièrement bruyants du fait qu'ils sont traversés par des flux de gaz à grandes vitesses. Pour atténuer le bruit engendré par ces turbomoteurs, on a déjà proposé de disposer à certains emplacements de la nacelle, par exemple à l'entrée et à la sortie du canal de fan, des revêtements susceptibles d'absorber au moins partiellement l'énergie sonore desdits flux.

On connaît déjà de nombreuses réalisations de tels revêtements, qui toutefois présentent la caractéristique commune d'avoir une structure minimale identique formée par une couche poreuse extérieure destinée à être au contact des flux gazeux, au moins une couche alvéolaire intermédiaire, par exemple du type en nid d'abeilles, et une couche postérieure de fixation. Ainsi, l'énergie sonore traversant la couche poreuse extérieure pénètre dans les alvéoles de la couche intermédiaire dans lesquels elle reste emprisonnée.

De tels revêtements, décrits par exemple dans les brevets US-A-3 439 774, US-A-3 821 999 et US-A-3 948 346, comportent une couche extérieure poreuse constituée par une plaque, par exemple métallique, perforée d'une pluralité d'ouvertures calibrées. Une couche extérieure poreuse de ce type présente l'avantage d'être lisse, donc d'offrir peu de résistance aux flux de gaz, mais en revanche son poids est élevé. Par exemple, le poids d'une plaque extérieure d'aluminium perforée pour une structure composite usuelle comportant une couche de nid d'abeilles en feuillard d'aluminium et une plaque postérieure d'aluminium, ne peut pas être inférieur à 1600 g/m².

Dans d'autres revêtements connus, par exemple ceux décrits dans les brevets US-A-3 502 171 et US-A-4 111 081 et dans le brevet FR-A-2 033 264, la couche poreuse est formée par une pluralité d'épaisseurs d'un tissu de verre, ces épaisseurs pouvant être angulairement décalées l'une par rapport à l'autre afin de régler la porosité de la couche résultante. Une telle couche poreuse est également relativement lourde à cause de la pluralité des épaisseurs de tissus de verre qui la constituent; de plus, sa face extérieure est moins lisse que celle des plaques perforées métalliques. Toutefois, le plus grand inconvénient de ces modes de réalisation connus provient du fait que les orifices de passage de l'énergie sonore dans chaque épaisseur sont constitués chacun par l'espace restreint défini entre deux fils de trame et deux fils de chaîne consécutifs. De tels petits orifices sont donc aisément obturés par la résine de solidarisation imprégnant ces tissus. Il en est d'autant plus ainsi que les orifices d'une épaisseur sont partiellement recouverts par ceux des autres épaisseurs. Il en résulte que la porosité est difficile à régler et à rendre uniforme sur la totalité de la surface du revêtement. Pour tenter d'éviter cet inconvénient, on est donc obligé de prendre de grandes précautions au moment de la solidarisation de la pluralité desdites épaisseurs et d'utiliser des résines peu fluides, comme les polyimides.

Par ailleurs, selon d'autres modes de réalisation connus, par exemple par les brevets US-A-3 481 427, US-A-3 960 236 et US-A-3 996 084, la totalité du revêtement est réalisée au moyen d'un tissu de fibres de verre ou de fibres connues commercialement sous le nom de KEVLAR (marque déposée). Ces modes de réalisation présentent les mêmes inconvénients que les précédents en ce qui concerne la porosité, l'état de surface et éventuellement le poids de la couche poreuse extérieure.

Enfin, par le brevet US-A-4 091 160, on connaît déjà un procédé pour la réalisation d'une couche poreuse pour structure composite destinée à l'absorption d'énergie sonore et comportant au moins une telle couche poreuse extérieure, constituée de fibres minérales ou synthétiques et recouvrant une couche alvéolaire, de telle sorte que l'énergie sonore traversant ladite couche poreuse est piégée dans les alvéoles de ladite couche alvéolaire, ce procédé consistant à former un tissu souple de mèches en ménageant des ouvertures, lesdites mèches étant constituées chacune d'une pluralité de fibres minérales ou synthétiques relativement libres et sensiblement parallèles les unes aux autres, puis à conformer ledit tissu souple à sa forme définitive et à le rendre rigide au moyen d'une résine durcissable tout en étant soumis à une pression.

Selon ce procédé antérieur connu, la porosité de ladite couche poreuse, c'est-à-dire le rapport entre la surface de passage à travers ladite couche et la surface totale de celle-ci est déterminée par le choix de la qualité et de la quantité de la résine durcissable utilisée. Il en résulte que le réglage de cette porosité est délicat et ne peut être obtenu de façon précise et reproductible.

La présente invention a pour objet de remédier à ces inconvénients des revêtements absorbants connus et, notamment, elle concerne un procédé du type décrit dans le document US-A-4 091 160 permettant un calibrage précis, aisé et reproductible des orifices de ladite couche poreuse.

A cette fin, selon l'invention, le procédé pour la réalisation d'une couche poreuse pour structure composite destinée à l'absorption d'énergie sonore et comportant au moins une telle couche poreuse extérieure, constituée de fibres minérales ou synthétiques et recouvrant une couche alvéolaire, de telle sorte que l'énergie sonore traversant ladite couche poreuse est piégée dans les alvéoles de ladite couche alvéolaire, procédé selon lequel on forme un tissu souple de mèches en ménageant des ouvertures, lesdites mèches étant constituées chacune d'une pluralité de fibres minérales ou synthétiques relativement libres et sensiblement parallèles les unes aux autres, ledit tissu souple étant ensuite conformé à sa forme définitive et rendu rigide au moyen d'une résine durcissable tout en étant soumis à une pression, est caractérisé en ce que les ouvertures ménagées entre les mèches de trame et les mèches de chaîne du tissu souple correspondent à une porosité supérieure à celle désirée pour le tissu rendu rigide par ladite résine et en ce que la porosité désirée pour ledit tissu rigide est ajustée en agissant sur la pression exercée sur le tissu souple lors de son durcissement et entraînant l'aplatissement et l'élargissement desdites mèches et donc la contraction desdites ouvertures, ledit tissu rigide formant après durcissement de la résine et application de la pression, un treillis rigide et mince, à larges lignes croisées, pratiquement uniformément lisse sur au moins sa face opposée à ladite couche alvéolaire.

Ainsi, étant donné qu'à l'intérieur de chaque mèche les fibres qui la composent sont sensiblement parallèles et relativement libres, il va de soi qu'au moment de l'application de la pression, lesdites mèches vont être facilement aplaties, de sorte que leur largeur va croître et que, par conséquence, la surface des ouvertures va diminuer, l'épaisseur du tissu diminuant. Cet aplatissement va être fonction de cette pression, de sorte qu'en réglant celle-ci, il est possible de régler la porosité de la couche poreuse selon l'invention.

Chaque mèche peut présenter au tissage une largeur de quelques millimètres et une épaisseur de quelques dizièmes de millimètres.

Avantageusement, la pression est ajustée pour que la porosité du tissu souple étant comprise entre 25 et 35%, la porosité du treillis rigide soit comprise entre 5 et 15%.

Ainsi, selon l'invention, on fait en sorte que les ouvertures ménagées entre les mèches de trame et les mèches de chaîne du tissu souple correspondent à une porosité supérieure à celle désirée pour le treillis rigide et on ajuste la porosité désirée pour le treillis rigide grâce à ladite pression exercée sur le tissu souple lors de son durcissement. Cette porosité désirée du treillis rigide peut donc être facilement adaptée à l'environnement sonore de tous les types de turbomoteurs.

On voit donc que, grâce à l'invention, non seulement on évite les difficultés dues aux obstructions des ouvertures de la couche poreuse, mais encore on peut régler à volonté les dimensions de celles-ci et la porosité de ladite couche.

Par ailleurs, grâce également à la relative liberté des fibres d'une mèche les unes par rapport aux autres, il est possible, lors de l'application de la pression, d'obtenir au moins une face pratiquement lisse pour le treillis rigide, puisqu'alors les mèches peuvent avoir une très faible épaisseur, qui correspond pratiquement à quelques diamètres des fibres qui les composent.

L'orientation relative des mèches de chaîne et des mèches de trame peut être quelconque, de sorte que les ouvertures quadrangulaires ménagées entre elles peuvent présenter toutes formes désirées, telles que losanges, rectangles, etc... Cependant, dans un mode de réalisation particulièrement avantageux du tissu selon l'invention, les mèches de chaîne et de trame sont orthogonales entre elles et délimitent dans le tissu souple des ouvertures carrées dont les côtés ont une longueur sensiblement égale à la largeur desdites mèches. Dans ce cas particulier, la surface totale desdites ouvertures représente donc environ le tiers de la surface totale du tissu souple.

Dans un mode de réalisation avantageux destiné à présenter une grande légèreté, les mèches sont constituées d'une pluralité de filaments de carbone. Par exemple, chaque mèche comporte environ de 1000 à 10 000 filaments de carbone, dont chacun d'entre eux présente un diamètre de quelques microns. De telles mèches sont disponibles dans le commerce sous le nom de TORAYCA (marque déposée). Dans un tel exemple, les mèches de filaments de carbone peuvent présenter au tissage une largeur de l'ordre de 2 millimètres et les ouvertures entre mèches de trame et mèches de chaîne du tissu souple sont des carrés d'environ 2 millimètres de côtés. La porosité du tissu souple est donc ce cas de l'ordre de 33%. En revanche, après imprégnation de résine, application de la pression et durcissement, le treillis peut être tel que les mèches durcies et aplaties peuvent présenter une largeur moyenne de l'ordre de 3 millimètres, la porosité de ce treillis étant ramenée entre 5 et environ 10%. Cette porosité finale peut être ajustée par réglage de la pression, pour être le mieux adapté possible à l'utilisation désirée pour le revêtement. Généralement, les différentes applications dans l'absorption des ondes sonores dans les nacelles de turbomoteurs exigent des porosités qui, selon le cas, varient de 5 à 15%.

On obtient ainsi une couche poreuse particulièrement légère. Si dans l'exemple de revêtement mentionné ci-dessus, on remplace la plaque extérieure perforée par le treillis selon l'invention, le poids de la couche poreuse passe de 1600 g/m² à 600 g/m².

Dans le cas d'utilisation, pour la fabrication de la couche poreuse selon l'invention, de mèches dont les fibres ont un faible diamètre et/ou sont en une matière très dure (ce qui est le cas des filaments de carbone), le tissu souple obtenu par tissage risque de présenter une faible tenue et les fibres risquent de foisonner latéralement. Il en résulte, d'une part, que le tissu est très déformable et qu'il est donc malaisé de le soumettre aux opérations consécutives devant assurer son durcissement et sa mise en forme et, d'autre part, que les ouvertures sont mal définies, car partiellement obturées par les fibres foisonnantes. Pour éviter ces inconvénients, selon une particularité importante de l'invention, on incorpore au tissu souple, des fils plus rigides, accolés aux mèches de chaque côté et en bordure de celles-ci. Ainsi, on évite le foisonnement des fibres et on donne de la rigidité au tissu souple. On remarquera que lesdits fils sont accolés aux mèches en bordure de celles-ci, et non pas incorporés auxdites mèches par enroulement hélicoïdal, de sorte que l'épaisseur de celles-ci n'est pas augmentée.

De préférence, lesdits fils de bordure sont conducteurs de l'électricité et forment un grillage conducteur d'armature.

Ainsi, ces fils de bordure, non seulement procurent les avantages mentionnés ci-dessus au moment du tissage, mais encore forment une armature au treillis rigide terminé, par exemple pour en accroître la résistance mécanique, notamment aux chocs. On sait, à ce sujet, que les entrées d'air des turbomoteurs sont sujettes aux chocs de grêlons, d'oiseaux etc... et on prévoit généralement des dispositifs de protection adéquate. Grâce à l'armature constituée par les fils de bordure mentionnés ci-dessus, on peut donner aux revêtements absorbant l'énergie sonore une grande résistance à l'éclatement, de sorte que ces dispositifs de protection peuvent être supprimés.

De plus, ces fils de bordure étant conducteurs de l'électricité, par exemple en bronze, ladite armature constitue un grillage conducteur, les fils de trame et de chaîne étant en contact électrique les uns avec les autres aux emplacements de leurs croisements. Ainsi, cette armature, qui renforce le faible pouvoir conducteur des fibres de carbone, peut de plus servir à l'évacuation des charges électriques statiques apparaissant aux endroits où sont disposés les revêtements selon l'invention. Ceux-ci peuvent donc participer à la protection contre la foudre.

Il est avantageux d'utiliser des fils de bronze pour réaliser l'armature car ceux-ci sont relativement inertes galvaniquement en présence du carbone.

Pour réaliser le tissage du tissu selon l'invention, il est avantageux d'utiliser une navette spéciale pour la pose des fils de bordures, différente de la navette destinée aux mèches de fibres.

L'invention concerne de plus une structure composite destinée à l'absorption d'énergie sonore comportant au moins une couche extérieure recouvrant une couche alvéolaire, caractérisée en ce que sa couche poreuse extérieure est formée par un seul treillis rigide obtenu par la mise en oeuvre du procédé selon l'invention.

Les figures du dessin annexé feront bien comprendre comment l'invention peut être réalisée.

La figure 1 est une vue en perspective, avec arrachement, d'un fragment de structure composite selon l'invention, destinée à l'absorption d'énergie sonore.

La figure 2 est une vue de face d'un fragment de tissu souple selon l'invention.

La figure 3 est une coupe agrandie suivant la ligne III-III de la figure 2.

La figure 4 est une vue de face d'un fragment de treillis rigide, obtenu par imprégnation de résine durcissable, pressage et durcissement du fragment de tissu de la figure 2.

La figure 5 est une coupe agrandie suivant la ligne V-V de la figure 4.

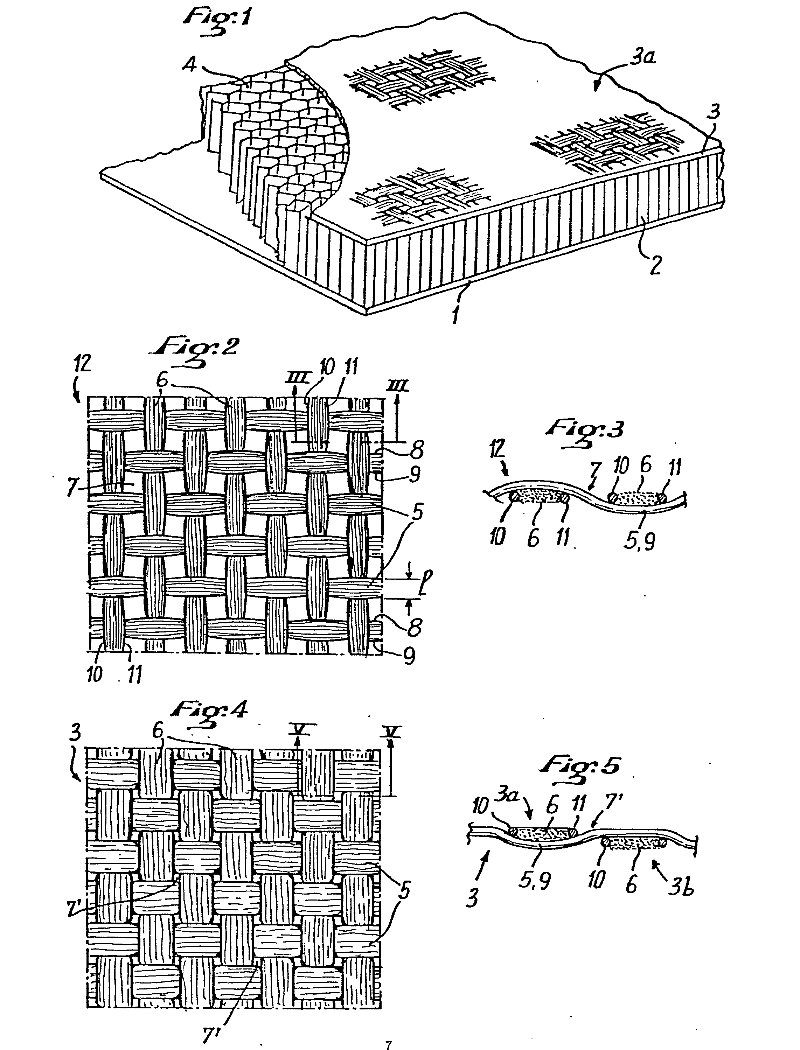

Le fragment de structure composite, destinée à l'absorption d'énergie sonore et montrée sur la figure 1, comporte une couche de base 1, sur laquelle est fixée une couche alvéolaire intermédiaire 2, elle-même supportant une couche poreuse 3.

La configuration générale d'une telle structure est connue et la présente invention concerne la réalisation et la nature de la couche poreuse 3.

La surface libre 3a de la couche poreuse 3 est par exemple au contact d'un écoulement gazeux pratiquement tangentiel. L'énergie sonore de cet écoulement gazeux passe au moins en partie à travers ladite couche poreuse 3 et se trouve piégée dans les alvéoles 4 de la couche intermédiaire 2. Cette dernière présente par exemple une structure en nid d'abeilles. La couche de base 1, par exemple en feuillard d'aluminium, sert à la fixation de la structure 1, 2, 3 sur un support, par exemple la paroi interne d'une nacelle de turbomoteur. Les couches 1, 2 et 3 sont par exemple rendues solidaires les unes des autres par collage.

Conformément à la présente invention, la couche poreuse 3 est réalisée par tissage, enduction et pressage d'un tissu de filaments de carbone, et les figures 2 à 5 illustrent la réalisation d'un mode de réalisation préféré d'une telle couche poreuse 3.

Dans l'exemple de réalisation illustré par les figures 2 à 5, on commence par réaliser un tissage lâche de mèches de filaments de carbone, les mèches de trame 5 et les mèches de chaîne 6 étant identiques.

Les mèches 5 et 6 sont constituées de plusieurs milliers de fibres de carbone (sensiblement parallèles entre elles et relativement libres) ayant quelques microns de diamètre et, à plat, au moment du tissage, ces mèches peuvent présenter une largeur 1 de l'ordre de 2 millimètres. Elles sont tissées, dans l'exemple représenté, de façon à être orthogonales les unes aux autres et à ménager entre elles des ouvertures carrées 7, dont les côtés ont une longueur approximativement égale à 1.

Par ailleurs, chaque mèche de trame 5 est bordée, de part et d'autre, de fins fils de bronze 8 et 9, tandis que chaque mèche de chaîne 6 est bordée, de part et d'autre, de fins fils de bronze 10 et 11, de sorte que lesdits fils sont tissés avec les mèches 5 et 6 et que chaque ouverture 7 est définie par quatre portions de fils 8 à 11.

On obtient ainsi un tissu lâche et souple 12, comme illustré par les figures 2 et 3.

Le tissu 12 est ensuite imprégné d'une résine thermo-durcissable, puis soumis à la température de cuisson de celle-ci, tout en subissant un pressage et une mise en forme (par exemple pour s'adapter à la paroi courbe d'une nacelle de turbomoteur). On obtient alors la couche poreuse rigide ou treillis 3 des figures 4 et 5. Le pressage aplatit les mèches 5 et 6 en les élargissant, de sorte que les ouvertures 7 deviennent des ouvertures plus petites 7' présentant les dimensions souhaitées pour l'application envisagée. Par ailleurs, ce pressage permet d'obtenir une face 3a de la couche 3 pratiquement lisse. Pour cela, il suffit de presser la couche 3 entre une surface dure, par exemple en acier inoxydable, disposée du côté de la face 3a et une surface molle, par exemple en caoutchouc, disposée du côté de la face opposée 3b.

Bien entendu, la couche poreuse rigide 3 est ensuite rendue solidaire de la couche alvéolaire 2 par sa face 3b.

Quoique dans l'exemple représenté sur les dessins, le tissage des mèches 5 et 6 soit à mailles carrées, il va de soi que le tissage peut être réalisé de façon à former toute maille quadrangulaire de forme désirée.

**Revendications**

1. Procédé pour la réalisation d'une couche poreuse (3) pour structure composite destinée à l'absorption d'énergie sonore et comportant au moins une telle couche poreuse extérieure, constituée de fibres minérales ou synthétiques et recouvrant une couche alvéolaire (4), de telle sorte que l'énergie sonore traversant ladite couche poreuse (3) est piégée dans les alvéoles de ladite couche alvéolaire (4), procédé selon lequel on forme un tissu souple (12) de mèches (5, 6) en ménageant des ouvertures (7), lesdites mèches étant constituées chacune d'une pluralité de fibres minérales ou synthétiques relativement libres et sensiblement parallèles les unes aux autres, ledit tissu souple étant ensuite conformé à sa forme définitive et rendu rigide au moyen d'une résine durcissable tout en étant soumis à une pression, caractérisé en ce que les ouvertures (7) ménagées entre les mèches de trame (5) et les mèches de chaîne (6) du tissu souple (12) correspondent à une porosité supérieure à celle désirée pour le tissu rendu rigide par ladite résine et en ce que la porosité désirée pour ledit tissu rigide est ajustée en agissant sur la pression exercée sur le tissu souple (12) lors de son durcissement et entraînant l'aplatissement et l'élargissement desdites mèches et donc la contraction desdites ouvertures (7), ledit tissu rigide formant après durcissement de la résine et application de la pression, un treillis rigide et mince (3), à larges lignes croisées, pratiquement uniformément lisse sur au moins sa face opposée à ladite couche alvéolaire (4).

2. Procédé selon la revendication 1, caractérisé en ce que chaque mèche (5, 6) présente au tissage une largeur de quelques millimètres (environ 2 mm) et une épaisseur de quelques dizièmes de millimètres.

3. Procédé selon la revendication 1, caractérisé en ce que la porosité du tissu souple (12) est comprise entre 25 et 35%, tandis que celle du treillis rigide (3) est comprise entre 5 et 15%.

4. Procédé selon l'une quelconque des revendications 1 à 3, caractérisé en ce que les mèches de trame (5) et les mèches de chaîne (6) du tissu souple (12) sont orthogonales entre elles et délimitent dans le tissu souple des ouvertures carrées (7) dont les côtés ont une longueur sensiblement égale à la largeur desdites mèches.

5. Procédé selon l'une quelconque des revendications 1 à 4, caractérisé en ce que les mèches (5, 6) sont constituées d'une pluralité de filaments de carbone.

6. Procédé selon les revendications 4 et 5, caractérisé en ce que les mèches (5, 6) de filaments de carbone présentent au tissage une largeur de l'ordre de 2 millimètres et en ce que les ouvertures (7) entre mèches de trame (5) et mèches de chaîne (6) du tissu souple (12) sont des carrés d'environ 2 millimètres de côtés.

7. Procédé selon l'une quelconque des revendications 1 à 6, caractérisé en ce que l'on incorpore au tissu souple (12) des fils plus rigides (8 à 11), accolés aux mèches (5, 6) de chaque côté et en bordure de celles-ci.

8. Procédé selon la revendication 7, caractérisé en ce que lesdits fils de bordure (8 à 11) sont conducteurs de l'électricité et forment un grillage conducteur d'armature.

9. Procédé selon l'une des revendications 7 ou 8, caractérisé en ce que lesdits fils de bordure (8 à 11) sont en bronze.

10. Structure composite destinée à l'absorption d'énergie sonore comportant au moins une couche poreuse extérieure recouvrant une couche alvéolaire (4), caractérisé en ce que sa couche poreuse extérieure est formée par un seul treillis rigide (3) obtenu par la mise en oeuvre du procédé spécifié sous l'une quelconque des revendications 1 à 9.

**Claims**

1. Process for making a porous layer (3) for composite structure intended for absorbing sound energy and comprising at least one such outer porous layer, constituted by mineral or synthetic fibres and covering a cellular layer (4), so that the sound energy passing through said porous layer (3) is trapped in the cells of said cellular layer (4), wherein one formes a supple loose fabric (12) from slivers (5, 6) forming apertures (7), said slivers being each constituted by a plurality of relatively free mineral or synthetic fibres, substantially parallel to one another, then said supple fabric being shaped to its final form and rendered rigid by means of a hardenable resin, whilst being subjected to pressure, characterized in that the apertures (7) between the warp slivers (5) and the weft slivers (6) of the supple fabric (12) correspond to a porosity greater than that desired for the fabric rendered rigid by said resin and in that the desired porosity for the rigid fabric is adjusted due to the pressure exerted on the supple fabric (12) when it hardens and causing the flattening and the widening of said slivers and therefore the contraction of said apertures, said rigid fabric forming after hardening of the resin and application of the pressure, a thin, rigid lattice, with wide crossed lines, virtually uniformly smooth on at least its face opposite said cellular layer (4).

2. The process of Claim 1, characterized in that each sliver (5, 6) has, on weaving, a width of a few millimeters (about 2 mm) and a thickness of a few tenths of millimeters.

3. The process of Claim 1, characterized in that the porosity of the supple fabric (12) is comprised between 25 and 35%, whilst that of the rigid lattice is comprised between 5 and 15%.

4. The process of one of Claims 1 to 3, characterized in that the warp slivers (5) and the weft slivers (6) of the supple fabric (12) are at right angles to one another and define in the supple fabric square openings (7) whose sides have a length of the order of size of the width of said slivers.

5. The process of one of Claims 1 to 4, characterized in that the slivers (5, 6) are constituted by a plurality of carbon filaments.

6. The process of Claims 4 and 5, characterized in that the slivers (5, 6) of carbon filaments have, on weaving, a width of the order of 2 mm, and in that the openings (7) between warp slivers (5) and weft slivers (6) of the supple fabric (12) are squares about 2 mm square.

7. The process of one of Claims 1 to 6, characterized in that more rigid wires (8, 11) are incorporated in the supple fabric (12) coupled to the slivers (5, 6), on each side and on the border thereof.

8. The process of Claim 7, characterized in that said border wires (8, 11) are electrically conducting and form a conducting reinforcing grid.

9. The process of one of Claims 7 or 8, characterized in that said border wires (8, 11) are made of bronze.

10. Composite structure intended for absorbing sound energy, comprising at least one outer porous layer covering a cellular layer (4), characterized in that its outer porous layer is formed by the single rigid lattice (3) of one of Claims 1 to 9.

**Patentansprüche**

1. Verfahren zur Herstellung einer porösen Schicht (3) für eine zur Aufnahme von Schallenergie bestimmten Verbundstruktur und bestehend aus zumindest einer solchen äusseren porösen Schicht, die aus Mineral- oder Kunststoffasern gebildet ist und eine bienenzellenförmige Schicht (4) abdeckt, so dass die die poröse Schicht (3) durchlaufende Schallenergie in den Zellen der Schicht (4) eingefangen wird, wobei nach diesem Verfahren ein geschmeidiges Gewebe (12) aus mit Öffnungen (7) versehenen Maschen (5, 6) gebildet wird, jede der Maschen aus mehreren verhältnismässig freien und allgemein zueinander parallel verlaufenden Mineral- und Kunststoffasern gebildet sind und wobei das geschmeidige Gewebe in seine endgültige Form gebracht sowie unter Druckbeaufschlagung mittels eines aushärtbaren Harzes verfestigt wird, dadurch gekennzeichnet, dass die zwischen den Schuhmaschen (5) und den Kettmaschen (6) ausgebildeten Öffnungen (7) des geschmeidigen Gewebes (12) einer Porosität entsprechen, die über der liegt, die für das Gewebe erwünscht ist, das durch das Harz verfestigt wird, und dadurch, dass die für das verfestigte Gewebe erwünschte Porosität geregelt wird, indem auf die Druckbeaufschlagung auf das geschmeidige Gewebe (12) bei einer Aushärtung sowie auf das Abflachen und Vergrössern der Maschen Einfluss genommen wird, was zu einer Zusammenziehung der Öffnungen (7) führt, so dass das verfestigte Gewebe nach dem Aushärten des Harzes und der Druckbeaufschlagung ein starres und dünnes Gitter (3) aus breiten gekreuzten Linien bildet, das auf zumindest der der bienenzellenförmigen Schicht (4) gegenüberliegenden Seite praktisch gleichförmig glatt ist.

2. Verfahren nach Anspruch 1, dadurch gekennzeichnet, dass jede Masche (5, 6) beim Weben eine Breite von einigen (etwa 2 mm) Millimeter und eine Dicke aufweist, die bei einigen Zehntel Millimeter liegt.

3. Verfahren nach Anspruch 1, dadurch gekennzeichnet, dass die Porosität des geschmeidigen Gewebes (12) zwischen 25% und 35% und die des festen Gitters (3) zwischen 5% und 15% beträgt.

4. Verfahren nach einem der vorhergehenden Ansprüche 1 bis 3, dadurch gekennzeichnet, dass die Schussmaschen (5) und die Kettmaschen (6) des geschmeidigen Gewebes (12) zueinander orthogonal stehen und im geschmeidigen Gewebe quadratische Öffnungen (7) beschreiben, deren Seiten eine allgemein der Breite der Maschen entsprechende Länge haben.

5. Verfahren nach einem der vorhergehenden Ansprüche 1 bis 4, dadurch gekennzeichnet, dass die Maschen (5, 6) aus einer Anzahl von Kohlenfasern gebildet sind.

6. Verfahren nach einem der vorhergehenden Ansprüche 4 bis 5, dadurch gekennzeichnet, dass die Maschen der Kohlenfasern beim Weben eine Breite in der Grössenordnung von 2 Millimeter besitzen und dass die Öffnungen (7) zwischen den Schuss- und Kettmaschen (5 bzw. 6) des geschmeidigen Gewebes (12) mit einer Seitenlänge von etwa 2 Millimeter quadratisch gestaltet sind.

7. Verfahren nach einem der vorhergehenden Ansprüche 1 bis 6, dadurch gekennzeichnet, dass im geschmeidigen Gewebe (12) steifere Fäden (8 bis 11) eingewirkt werden, die den Maschen (5, 6) auf jeder Seite sowie an deren Rändern angehängt werden.

8. Verfahren nach Anspruch 7, dadurch gekennzeichnet, dass die Randfäden (8 bis 11) elektrisch leitend sind und ein leitendes Bewehrungsgeflecht bilden.

9. Verfahren nach einem der Ansprüche 7 oder 8, dadurch gekennzeichnet, dass die Randfäden (8 bis 11) aus Bronze bestehen.

10. Verbundstruktur zur Aufnahme von Schallenergie bestehend aus zumindest einer eine bienenzellenförmige Schicht (4) abdeckende äusseren porösen Schicht, dadurch gekennzeichnet, dass die äussere poröse Schicht aus einem einzigen steifen Gewebe oder Gitter (3) gebildet ist, das geschaffen wird, indem das in den Ansprüchen 1 bis 9 gekennzeichnete Verfahren durchgeführt wird.

0 038 746

Fig:1

Fig:2

Fig:3

Fig:4

Fig:5

7